(19) Europäisches Patentamt

European Patent Office

Office européen des brevets

(11) **EP 3 553 532 B1**

(12) **EUROPEAN PATENT SPECIFICATION**

(45) Date of publication and mention of the grant of the patent:
**05.07.2023 Bulletin 2023/27**

(21) Application number: **17878305.6**

(22) Date of filing: **08.12.2017**

(51) International Patent Classification (IPC):
$G01P\ 3/49$ (2006.01)    $G01P\ 3/50$ (2006.01)

(52) Cooperative Patent Classification (CPC):
**G01P 3/505; G01P 3/49; G01P 3/50**

(86) International application number:
**PCT/JP2017/044193**

(87) International publication number:
**WO 2018/105728 (14.06.2018 Gazette 2018/24)**

(54) **SPEED DETECTION DEVICE**

GESCHWINDIGKEITSDETEKTIONSVORRICHTUNG

DISPOSITIF DE DÉTECTION DE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2016 JP 2016239788**

(43) Date of publication of application:
**16.10.2019 Bulletin 2019/42**

(73) Proprietor: **Nabtesco Corporation**
**Tokyo 102-0093 (JP)**

(72) Inventors:
• **FLANKL, Michael**
**8092 Zurich (CH)**
• **TUEYSUEZ, Arda**
**8092 Zurich (CH)**
• **KOLAR, Johann W.**
**8092 Zurich (CH)**

• **TSUKADA, Yusuke**
**Kobe-shi**
**Hyogo 651-2271 (JP)**
• **NAKAMURA, Kazuhito**
**Kobe-shi**
**Hyogo 651-2271 (JP)**

(74) Representative: **Grünecker Patent- und Rechtsanwälte**
**PartG mbB**
**Leopoldstraße 4**
**80802 München (DE)**

(56) References cited:
**EP-A1- 3 062 067      GB-A- 2 279 459**
**JP-A- 2016 008 929      JP-U- S5 458 171**
**US-A1- 2014 070 675      US-A1- 2014 346 777**
**US-A1- 2015 323 349      US-A1- 2016 111 936**

**Description**

**TECHNICAL FIELD**

The present invention relates to a speed detecting device for detecting a speed of a moving body.

**BACKGROUND**

A technique has been disclosed in which a non-contact electromagnetic induction sensor is used to detect a moving speed of a moving body including a magnet attached thereto, the sensor being configured to output an induction voltage according to a rate of change in magnetic flux produced by the magnet (see Japanese Patent Application Publication No. H03-25372).

Document US 2014 / 346 777 A1 relates to an electric apparatus comprises a stator having an array of coils positioned within its periphery and a first rotor having an array of magnet pairs positioned within its periphery. The first rotor has one face adjacent to the stator. A second rotor made of conductive material is positioned adjacent to another face of the first rotor. A coupling mechanism may be connected to the second rotor. The electric apparatus may be connected to an electric power source and act as a motor for driving a mechanical load attached to the coupling mechanism. The electric apparatus may alternatively be connected to an electric load, a turbine being attached to the coupling mechanism for generating electric power. An enclosure may protect components of the electric apparatus against external elements, for example to allow underwater operation.

Document US 2016 / 111 936 A1 relates to a wind turbine rotary shaft is coupled to the rotary axis of a grid connected generator/alternator by magnetic means to feed power to the grid at all rotation speeds of the turbine shaft that exceed the generator speed when it acts as a motor power by the grid. The coupling is a generally circular first plate having a magnet array at the end of the generator shaft. The rotary axis of a turbine is likewise connected to a second generally circular plate. The second plate is electrically conductive, but not magnetic and is offset but adjacent to the first plate. When the turbine shaft is turning faster than the generator shaft more power is fed into the grid by the generator/alternator.

Document US 2014 / 070 675 A1 relates to an electrical generator for bicycles and similar vehicles. The generator includes a moveable magnet part which will generate an induction current in a coil when the magnet part moves. The generator is configured to be mounted near an electrical conducting part of the bicycle. The electrical conducting part, e.g. a rim, is rotatably arranged with the bicycle. When the electrical conducting part rotates the magnetic field from the magnet part will generate eddy current in the electrical conducting part. The eddy current will generate a magnetic field which will force the magnet part to move, e.g. rotate. Thus, an electrical current will be generated in the coil when the electrical conducting part rotates.

**SUMMARY**

While being capable of detecting the moving speed of the moving body in a non-contact manner, the technique disclosed in Japanese Patent Application Publication No. H03-25372 requires that the magnet be attached to the moving body, thus failing to detect a moving speed of a moving body that does not include the magnet. Furthermore, there is also known a sensor for detecting a moving speed of a moving body in a contact manner. Such a contact type sensor, however, is susceptible to breakage due to an impact such as vibrations, thus being disadvantageous in terms of reliability and durability.

The present invention is intended to solve the above-described problems, and one object thereof is to provide a speed detecting device capable of accurately detecting a moving or rotating speed of a moving body in a non-contact manner.

To overcome the above drawbacks, one aspect of the present invention is a speed detecting device comprising: a rotating body including a permanent magnet, the rotating body being spaced above a principal surface of a moving body, the moving body being a conductor configured to rotate or move, the permanent magnet being configured to be driven to rotate about a predetermined rotation axis by a Lorentz force produced in accordance with a rotating or moving direction of the moving body; a rotational speed $\omega 1max$ caused by said Lorentz force depending on the moving or rotating speed of the moving body; a motor configured to apply a further rotational drive force to the rotating body; a rotation control unit configured to control the rotational drive force applied by the motor to the rotating body to vary a rotating speed of the rotating body caused by the rotational drive force of the Lorentz force such that the rotating body rotates at a desired rotating speed w1; a current detecting unit configured to detect a value of electric current flowing through the motor during the operation to rotate the rotating body at the desired rotating speed $\omega 1$; and a moving speed estimating unit configured to estimate a moving or rotating speed of the moving body based on the value of the electric current detected by the current detecting unit, said current being correlated with said further rotational drive force.

It is also possible that the speed detecting device further comprises a correlation detecting unit for detecting a correlation between the value of the electric current detected by the current detecting unit and the moving or rotating speed of the moving body, and the moving speed estimating unit estimates the moving or rotating speed of the moving body based on the value of the electric current detected by the current detecting unit and the correlation.

It is also possible that the moving speed estimating unit estimates the moving or rotating speed of the moving body based on a correlation between the value of the electric current detected by the current detecting unit and a torque applied to a rotary shaft of the motor, a correlation between the torque, which depends on a degree of magnetic coupling between the rotating body and the moving body, and the rotating speed of the rotating body, and a correlation between the rotating speed of the rotating body, which depends on the degree of magnetic coupling, and the moving or rotating speed of the moving body.

It is also possible that the speed detecting device further comprises: a correlation detecting unit for detecting the correlation between the torque and the rotating speed of the rotating body and the correlation between the rotating speed of the rotating body and the moving or rotating speed of the moving body, for each of a plurality of degrees of magnetic coupling between the rotating body and the moving body; and a magnetic coupling degree estimating unit for estimating the degree of magnetic coupling based on the value of the electric current flowing through the motor detected successively for a plurality of times for varying rotating speed of the rotating body and the correlations detected by the correlation detecting unit for each of the plurality of times, and the moving speed estimating unit estimates the moving or rotating speed of the moving body based on the value of the electric current detected by the current detecting unit, the degree of magnetic coupling estimated by the magnetic coupling degree estimating unit, and the correlations detected by the correlation detecting unit.

It is also possible that the degree of magnetic coupling is a gap between the rotating body and the moving body.

It is also possible that the degree of magnetic coupling is a degree of overlapping between respective opposed surfaces of the rotating body and the moving body.

It is also possible that the rotating body is spaced from and opposed to the principal surface of the moving body, the principal surface being a side surface of the moving body continuous with an outer peripheral surface of the moving body.

It is also possible that the speed detecting device further comprises: a protective member covering at least part of an outer surface of the rotating body including a surface thereof opposed to the principal surface of the moving body; and a magnetic material removing unit for removing a magnetic material adhering to a surface of the protective member opposed to the principal surface of the moving body.

It is also possible that the permanent magnet has two or more magnetic poles opposed to the moving body.

It is also possible that the motor operates as a power generator for converting kinetic energy produced by rotation of the rotating body into electric energy, the speed detecting device further comprises a capacitor for storing the electric energy obtained through conversion by the power generator, and the electric energy stored by the capacitor is used as a power source for at least one of the motor, the rotation control unit, the current detecting unit, and the moving speed estimating unit.

According to the present invention, it is possible to accurately detect a moving or rotating speed of a moving body in a non-contact manner.

## BRIEF DESCRIPTION OF THE DRAWINGS

Fig. 1 is block diagram showing a schematic configuration of a speed detecting device according to a first embodiment of the present invention.

Fig. 2 is a view showing an example in which a principal surface of a moving body and a principal surface of a rotating body are opposed to each other in a partially overlapping state.

Fig. 3 is a view showing an example in which a surface or an outer peripheral surface of the moving body and an outer peripheral surface of the rotating body are opposed to each other.

Fig. 4 is a view explaining a principle of application of a rotational drive force to the rotating body caused by eddy currents produced in a side surface of the moving body.

Fig. 5 is a graph showing a correlation between a moving speed of the moving body and a maximum rotating speed of the rotating body.

Fig. 6 is a graph showing a correlation between a rotating speed of the rotating body and a torque applied to a rotary shaft of a motor.

Fig. 7 is a graph showing a correlation between an electric current flowing through the motor and the torque applied to the rotary shaft of the motor.

Fig. 8A shows a waveform indicating the time variation of the moving or rotating speed of the moving body.

Fig. 8B shows a waveform indicating the time variation of the rotating speed of the rotating body.

Fig. 8C shows a waveform indicating the time variation of the torque applied to the rotary shaft of the motor or the electric current flowing through the motor.

Fig. 8D shows an estimation waveform indicating an estimated moving or rotating speed of the moving body.

Fig. 9 is a block diagram showing the speed detecting device of Fig. 1 additionally including a correlation detecting unit and a magnetic coupling degree estimating unit.

Fig. 10 is a block diagram showing a schematic configuration of the speed detecting device 1 according to a second embodiment.

Fig. 11 is an exploded perspective view of a non-contact power generator including the speed detecting device shown in Fig. 10.

Fig. 12 is a sectional view of the non-contact power generator shown in Fig. 11.

Fig. 13A is a view showing a first modification example of the speed detecting device.

Fig. 13B is a view showing a second modification example of the speed detecting device.

## DESCRIPTION OF THE EMBODIMENTS

Embodiments of the present invention will be hereinafter described in detail.

< First Embodiment >

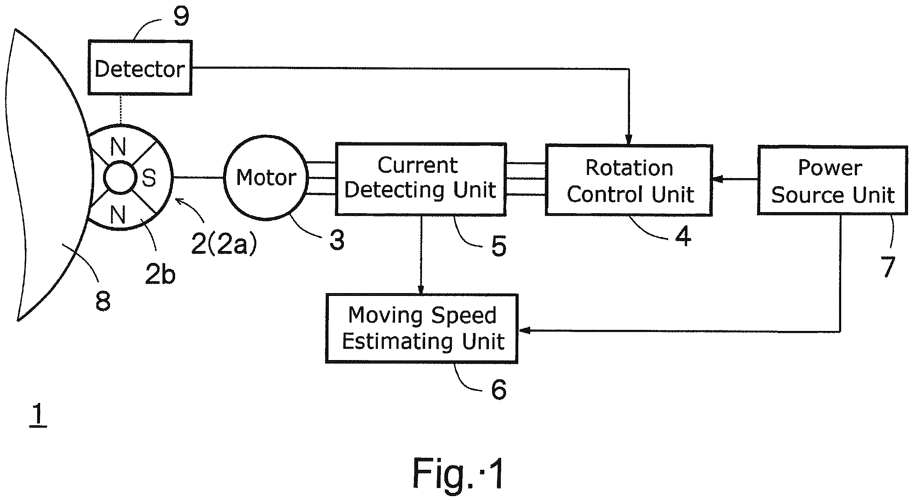

Fig. 1 is a block diagram showing a schematic configuration of a speed detecting device 1 according to a first embodiment of the present invention. The speed detecting device 1 in FIG. 1 is provided with a rotating body 2, a motor 3, a rotation control unit 4, a current detecting unit 5, a moving speed estimating unit 6, and a power source unit 7.

The rotating body 2 is spaced above a principal surface of a moving body 8, the moving body 8 being a conductor that moves or rotates. The rotating body 2 includes a permanent magnet 2a that rotates about a predetermined rotation axis by a Lorentz force produced in accordance with a moving or rotating direction of the moving body 8. The rotating body 2 is rotatable about the predetermined rotation axis. The rotating body 2 rotates clockwise or counterclockwise in accordance with the moving or rotating direction of the moving body 8. The permanent magnet 2a of the rotating body 2 has a plurality of magnetic poles 2b arranged circumferentially. The number of magnetic poles 2b included in the permanent magnet 2a is not particularly limited as long as the number is two or more. As the number of the magnetic poles 2b increases, unevenness in rotational force (a cogging torque) due to a rotational angle of the rotating body 2 decreases. In a case, however, where there is a wide gap between the moving body 8 and the rotating body 2, when the number of magnetic poles 2b is increased, the magnitude of a magnetic force per each of the magnetic poles 2b decreases to reduce magnetic fluxes reaching the moving body 8, so that a force for rotating the rotating body 2 is weakened.

The moving body 8 is a dynamic body that rotates, such as a wheel of a vehicle, or a dynamic body that moves in one direction or in a plurality of directions. The moving body 8 produces an eddy current in the principal surface thereof opposed to the rotating body 2. Accordingly, it is required that the principal surface of the moving body 8 be formed of an electrically conductive material, such as metal, that can produce an eddy current.

The motor 3 applies a rotational drive force to the rotating body 2 independently of a Lorentz force produced by magnetic coupling with the moving body 8. Thus, the rotating body 2 rotates even when the moving body 8 is not moving or rotating. The motor 3 applies a rotational drive force to the rotating body 2 in a direction the same or counter to the direction in which the rotating body 2 rotates by the Lorentz force produced in accordance with a moving or rotating speed of the moving body 8. When the motor 3 does not apply a rotational drive force to the rotating body 2, the rotating body 2 rotates by the Lorentz force at a rotating speed in accordance with the moving or rotating speed of the moving body 8 (this rotating speed of the rotating body 2 will be hereinafter referred to as the first rotating speed). In a state where the rotating body 2 is rotating stably at the first rotating speed, the rotating body 2 is neither acted on by the Lorentz force nor receiving the rotational drive force from the motor 3, with no regard to losses caused by friction and the like. When the rotating body 2 in this state receives the rotational drive force from the motor 3 in such a manner as to reduce the rotating speed of the rotating body 2, the rotating body 2 receives a brake force and the motor 3 operates as a power generator. At this time, an electric current flows through the motor 3 in a positive direction, and the value of this electric current is detected by the current detecting unit 5. On the other hand, when the rotating body 2 rotating stably in the first rotating speed receives the rotational drive force from the motor 3 in such a manner as to increase the rotating speed of the rotating body 2, the motor 3 operates as a so-called motor and increases the power consumption. At this time, an electric current flows through the motor 3 in a negative direction, and the value of this electric current is also detected by the current detecting unit 5. The motor 3, which operates as a power generator and as a so-called motor as described above, is herein referred to simply as "the motor." In the above description, the direction of the electric current flowing through the motor 3 is positive when the motor 3 operates as a power generator, while the direction of the electric current flowing through the motor 3 is negative when the motor 3 operates as a so-called motor. This description is merely an example, and these directions may be interchanged.

The rotation control unit 4 controls the rotational drive force applied by the motor 3 to the rotating body 2 to vary the rotating speed of the rotating body 2. More specifically, the rotation control unit 4 monitors the rotating speed of the rotating body 2 with a detector 9 and controls the rotational drive force to be applied by the motor 3 to the rotating body 2 such that the rotating body 2 rotates at a desired rotating speed. Alternatively, the rotation control unit 4 may not use the detector 9 to control the rotational drive force of the motor 3 such that the rotating body 2 rotates at a desired rotating speed. In the latter case, the detector 9 is unnecessary. The rotating speed of the rotating body 2 can be controlled by the drive current frequency of the motor 3. Therefore, the drive current frequency of the motor 3 may be controlled in order to rotate the rotating body 2 at a desired speed without use of the detector 9. As described above, the rotation control unit 4 controls the rotational drive force such that the rotating body 2 rotates at a predetermined rotating speed. More specifically, the rotation control unit 4 control the rotational drive force applied by the motor 3 based on the moving or rotating speed of the moving body 8 estimated by the moving speed estimating unit 6, such that the rotating body 2 rotates at a desired speed.

The detector 9 detects a rotating speed of the rotating body 2. The detector 9 may be of a non-contact type or a contact type. The detector 9 of the non-contact type may be formed of a Hall element utilizing the Hall effect, an encoder using an optical slit, a coil utilizing an induced electromotive force, or a proximity sensor of a capacitance type, an induction type, or a Hall element type utilizing the number of gear teeth or a variation in gap. The detector 9 of the contact type may be formed of, for example, a potentiometer mounted to a rotary shaft of the rotating body 2. Thus, a specific configuration of the detector 9 is not particularly limited.

The current detecting unit 5 detects the value of the electric current flowing through the motor 3 during the operation to rotate the rotating body 2 at a desired speed, the rotating body 2 receiving the rotational drive force of the Lorentz force. This electric current may be hereinafter referred to as the motor current. As the rotational drive force of the motor 3 is larger, the electric current flowing through the motor 3 is larger. As the difference between the moving or rotating speed of the moving body 8 and the rotating speed of the rotating body 2 is larger, the rotational drive force of the motor 3 is larger and the electric current flowing through the motor 3 is larger. More specifically, variation of the moving or rotating speed of the moving body 8 results in variation of the effective value of the electric current waveform in the motor 3, not in variation of the frequency of the electric current waveform. Therefore, the current detecting unit 5 detects the effective value of the electric current waveform in the motor 3.

The moving speed estimating unit 6 estimates the moving or rotating speed of the moving body 8 based on the electric current detected by the current detecting unit 5.

The power source unit 7 supplies a power source voltage to the units in the speed detecting device 1 shown in Fig. 1. In Fig. 1, arrow lines indicate that the power source voltage is supplied from the power source unit 7 to the rotation control unit 4 and the moving speed estimating unit 6, and the power source voltage may be supplied also to the motor 3 and the current detecting unit 5 as necessary.

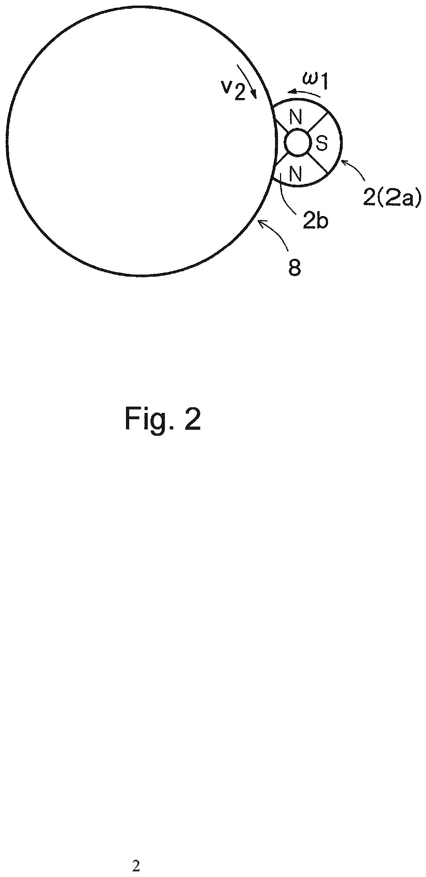

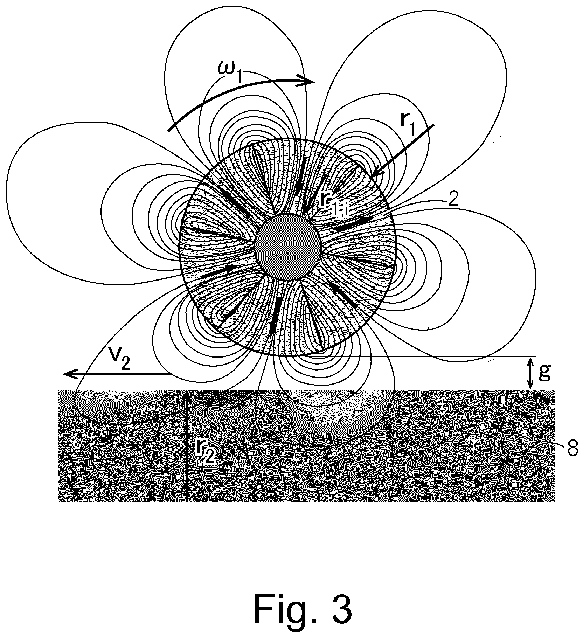

The following first describes a principle of rotation of the rotating body 2 caused in accordance with movement of the moving body 8. The moving body 8 and the rotating body 2 are opposed to each other. Fig. 2 shows an example in which the principal surface of the moving body 8, which is a side surface thereof, and a principal surface of the rotating body 2 are disposed to face each other so that the principal surface of the moving body 8 and the principal surface 2d of the rotating body 2 are opposed to each other in a partially overlapping state. In a case where the entire principal surface 2d of the rotating body 2 is opposed to the principal surface of the moving body 8 in an overlapping manner, the rotating body 2 hardly rotates, and this arrangement, therefore, is not preferable. Instead of the arrangement in which the side surface of the moving body 8 is opposed to the principal surface 2d of the rotating body 2, a surface or an outer peripheral surface of the moving body 8 may be opposed to an outer peripheral surface of the rotating body 2 as shown in Fig. 3.

In this embodiment, eddy currents are produced in a side surface 8a of the moving body 8 by magnetic fluxes from the magnetic poles 2b of the permanent magnet 2a in the rotating body 2. Therefore, a gap between the principal surface 2d of the rotating body 2 and the side surface 8a of the moving body 8 is limited to a range within which magnetic fluxes from the magnetic poles 2b of the rotating body 2 can reach the moving body 8.

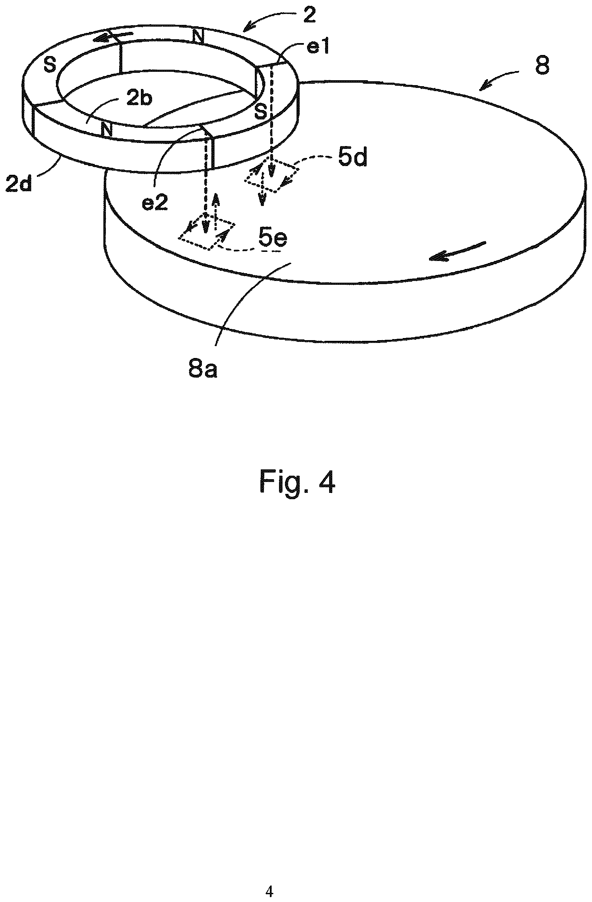

The magnetic poles 2b of the permanent magnet 2a are magnetized in a direction toward the side surface 8a of the moving body 8 opposed to the magnetic poles 2b or a direction opposite thereto. Furthermore, magnetization directions of each pair of adjacent magnetic poles 2b of the permanent magnet 2a are opposite to each other. In Fig. 3, the magnetization directions of the magnetic poles 2b of the permanent magnet 2a are indicated by arrows. As shown in Fig. 3 and Fig. 4, the first side surface 2d of the rotating body 2 includes N-poles and S-poles alternating circumferentially. Furthermore, in a side surface of the rotating body 2 opposite to the side surface 2d opposed to the moving body 8, polarities are opposite to those in the side surface 2d.

Fig. 4 explains the principle of application of the rotational drive force to the rotating body 2 caused by eddy currents 5d, 5e produced in the side surface 8a of the moving body 8, in the case where the surface speed of the first side surface 2d of the rotating body 2 is controlled by the rotation control unit 4 and the motor 3 to be lower than the surface speed of the side surface 8a of the moving body 8 opposed to the first side surface 2d. Magnetic fluxes from magnetic poles 2b opposed to the side surface 8a of the moving body 8, among the plurality of magnetic poles 2b arranged circumferentially in the first side surface 2d of the rotating body 2, propagate toward the side surface 8a of the moving body 8. There is an air gap between the first side surface 2d of the rotating body 2 and the side surface 8a of the moving body 8, and the magnetic fluxes from the rotating body 2 propagate through the air gap.

When the moving body 8 rotates, eddy currents are produced in the side surface 8a of the moving body 8 in such directions as to hinder a change in the magnetic fluxes from the rotating body 2. The rotational drive force is applied to the rotating body 2 by an interaction (a repulsive force and an attractive force) between magnetic fluxes produced by the eddy currents and the magnetic fluxes from the rotating body 2.

For example, when an N-pole of the rotating body 2 is opposed to the side surface 8a of the moving body 8, a direction of the eddy current 5d produced in the side surface 8a of the moving body 8 at a portion reached by a magnetic flux from an edge e1 of the N-pole at the front in a rotating direction is different from a direction of the eddy current 5e produced in the side surface 8a of the moving body 8 at a portion reached by a magnetic flux from an edge e2 of the N-pole at the rear in the rotating direction. The eddy current 5e produced by the magnetic flux from the edge e2 of the N-pole at the rear in the rotating direction flows in such a direction as to produce a magnetic flux in an opposite direction to a direction of the magnetic flux from the N-pole. On the other hand, the eddy current 5d produced in the side surface 8a of the moving body 8 at a portion reached by the magnetic flux from the edge e1 of the N-pole at the front in the rotating direction flows in such a direction as to produce a magnetic flux in the same direction as a direction of the magnetic flux from the N-pole. The eddy currents 5d, 5e both flow in such directions as to hinder a change in the magnetic fluxes from the rotating body 2 caused by rotation of the moving body 8.

As described above, on the edge e1 side of the N-pole of the rotating body 2 at the front in the rotating direction, the direction of the magnetic flux produced by the eddy current 5d is the same as the direction of the magnetic flux from the N-pole of the rotating body 2, and thus an attractive force acts therebetween. On the other hand, on the edge e2 side of the N-pole of the rotating body 2 at the rear in the rotating direction, the direction of the magnetic flux produced by the eddy current 5e is opposite to the direction of the magnetic flux from the N-pole of the rotating body 2, and thus a repulsive force acts therebetween. When the surface speed of the first side surface 2d of the rotating body 2 is lower than the surface speed of the side surface 8a of the moving body 8 opposed to the first side surface 2d, the above-described relationship between the rotating body 2 and the eddy currents 5d, 5e holds true at all times. Thus, the rotating body 2 receives the rotational drive force applied in accordance with the moving direction of the moving surface of the side surface 8a of the moving body 8 opposed to the rotating body 2.

The above principle of the rotational drive force applied to the rotating body 2 can also be described in terms of a repulsive force based on a Lorentz force. As described above, the direction of the eddy current 5d produced by the magnetic flux from the edge e1 of the N-pole of the rotating body 2 at the front in the rotating direction is opposite to the direction of the eddy current 5e produced by the magnetic flux from the edge e2 of the rotating body 2 at the rear in the rotating direction, and thus a current flows in a constant direction directly under the N-pole at all times. When the moving body 8 rotates in a direction indicated by an arrow shown in Fig. 4, currents produced by the eddy currents 5d, 5e are subjected to a Lorentz force in a direction opposite to the rotating direction of the moving body 8. Therefore, the rotating body 2 subjected to magnetic fluxes produced by the eddy currents 5d, 5e receives the rotational drive force under a repulsive force based on the Lorentz force, the repulsive force acting in the rotating direction of the moving body 8.

The directions of the eddy currents and the magnetic forces indicated by the arrows in Fig. 4 are for the case where the rotating body 2 rotates at a speed lower than the surface speed of the moving body 8. The directions of the eddy currents and the magnetic forces will be opposite to those in Fig. 4 when the rotating body 2 rotates at a speed higher than the surface speed of the moving body 8 by the rotational drive force of the motor 3.

Next, a description is given of a procedure for estimating the moving or rotating speed of the moving body 8. As described above, the rotating body 2 receives the rotational drive force in accordance with the relative speed difference between the moving or rotating speed of the moving body 8 and the rotating speed of the rotating body 2.

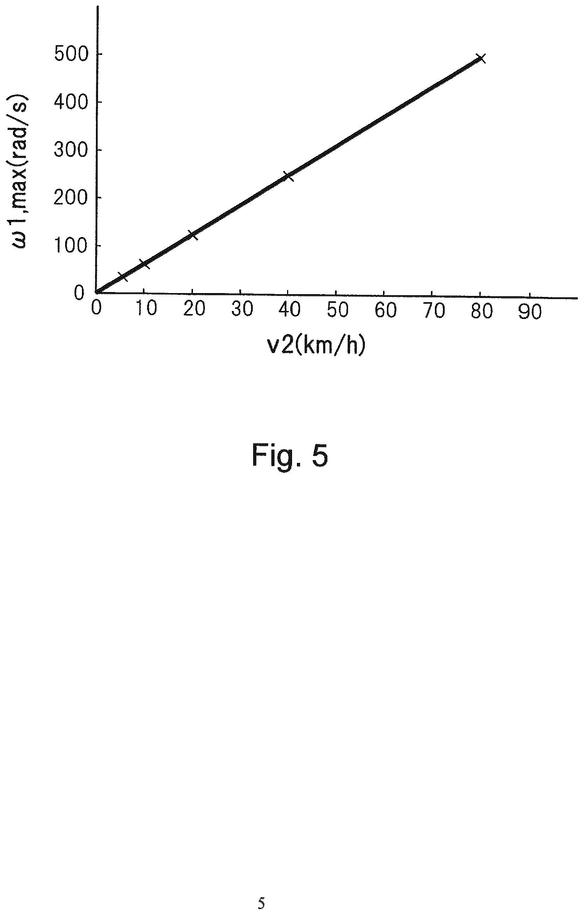

Fig. 5 is a graph showing the correlation between the moving speed of the moving body 8 and the maximum rotating speed of the rotating body 2. In Fig. 5, a horizontal axis indicates the moving speed v2 (km/h) of the moving body 8, and a vertical axis indicates the maximum rotating speed $\omega 1max$ (rad/s) of the rotating body 2. The maximum rotating speed $\omega 1max$ of the rotating body 2 is the maximum rotating speed $\omega 1$ max of the rotating body 2 rotating without the rotational drive force of the motor 3. The maximum rotating speed $\omega 1$ max of the rotating body 2 is expressed by Formula (1) below.

$$\omega 1max\ (g,\ v2) = k1(g) \cdot v2 \tag{1}$$

In Formula (1) above, v2 is the moving or rotating speed of the moving body 8, g is the gap between the moving body 8 and the rotating body 2, and k1 is a proportionality coefficient depending on the gap g. As seen from Formula (1), the maximum rotating speed $\omega 1$ max of the rotating body 2 depends on the gap g and the moving or rotating speed v2 of the moving body 8.

The graph of Fig. 5 indicates characteristics for the case where the gap g between the moving body 8 and the rotating body 2 is 10 mm. When the gap g changes, the inclination in the graphs of Fig. 5 changes. The gap g refers to a minimum distance between the surfaces of the moving body 8 and the rotating body 2 opposed to each other.

As seen from the graph in Fig. 5, the maximum rotating speed $\omega 1$ max of the rotating body 2 and the moving speed of the moving body 8 are related linearly, and when the moving speed of the moving body 8 changes, the rotating speed of the rotating body 2 changes linearly in synchronization with the change in the moving speed of the moving body 8. Fig. 5 shows characteristics in an exemplary case where the moving body 8 moves in one direction or in a plurality of directions, and when the moving body 8 rotates, the rotating speed of the moving body 8 and the rotating speed of the rotating body 2 are also related linearly.

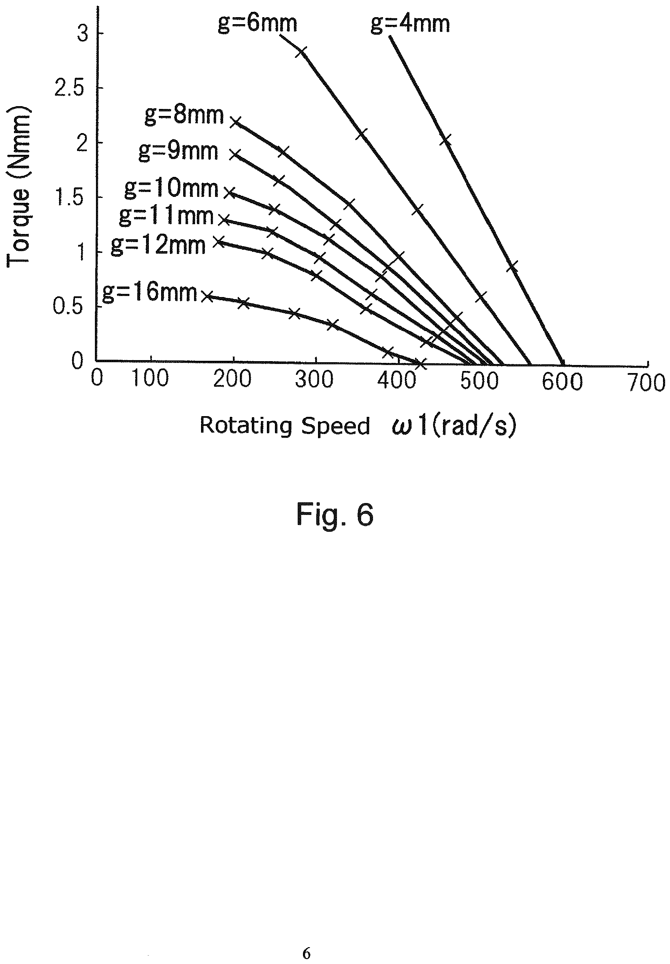

Fig. 6 is a graph showing a correlation between a rotating speed of the rotating body 2 and a torque applied to a rotary shaft of a motor 3. In Fig. 6, the horizontal axis indicates the rotating speed $\omega 1$ (rad/s) of the rotating body 2, and the vertical axis indicates the torque (Nmm). Fig. 6 contains lines indicating the correlation between the rotating speed of the rotating body 2 and the torque for varied gaps between the moving body 8 and the rotating body 2. As seen from the lines in Fig. 6, the torque at the same rotating speed is larger as the gap is smaller. For the same gap, the torque is smaller as the rotating speed of the rotating body 2 is higher. The rate of change of the torque relative to the change of the rotating speed of the rotating body 2 is larger as the gap is smaller. The intersection point of each line with the horizontal line indicates the maximum rotating speed $\omega 1max$. The torque is zero at the maximum rotating speed $\omega 1max$. This indicates that the rotating body 2 rotates even when the motor 3 does not apply the rotational drive force. The rotating speed of the rotating body 2 at this time is the maximum rotating speed $\omega 1max$.

As seen from Fig. 6, the torque T1 is expressed by Formula (2) below.

$$T1 \fallingdotseq k2(g) \cdot (\omega 1max\ (g,\ v2) - \omega 1) = k2(g) \cdot (k1(g) \cdot v2 - \omega 1) \tag{2}$$

In Formula (2) above, k2 is a proportionality coefficient depending on the gap, and $\omega 1$ is the rotating speed of the rotating body 2. As seen from Formula (2), the torque T1 is a function $T1(\omega 1, v2, g)$ that depends on the rotating speed $\omega 1$ of the rotating body 2, the moving or rotating speed v2 of the moving body 8, and the gap g between the moving body 8 and the rotating body 2.

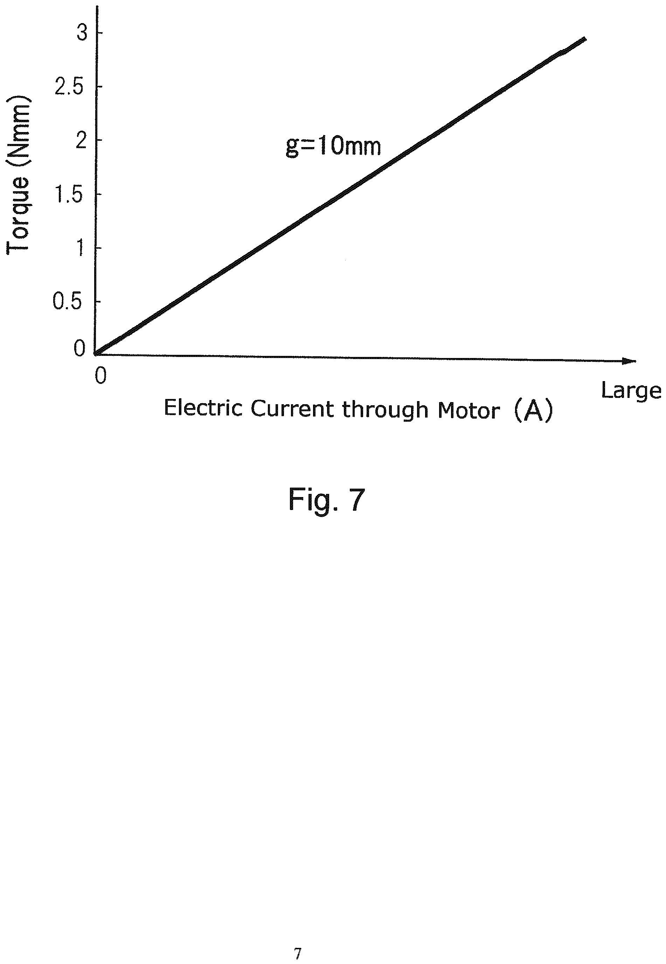

Fig. 7 is a graph showing a correlation between an electric current flowing through the motor 3 and the torque applied to the rotary shaft of the motor 3. In Fig. 7, the horizontal axis indicates the electric current (A) flowing through the motor 3, or more particularly, the electric current contributing to the rotational torque of the motor 3. The vertical axis indicates the torque (Nmm). As seen from Fig. 7, the torque and the electric current flowing through the motor 3 are in a linear relationship, and therefore, the torque is larger as the electric current flowing through the motor 3 is larger. The inclination of the graph in Fig. 7 is a proportionality constant inherent to the motor 3, and this proportionality constant varies depending on the type of the motor 3.

The moving speed estimating unit 6 detects a torque from the graph of Fig. 7 using the electric current flowing through the motor 3 that is detected by the current detecting unit 5, and then detects from the graph of Fig. 6 the maximum rotating speed ω1max of the rotating body 2 corresponding to the detected torque, and then detects from the graph of Fig. 5 the moving speed of the moving body 8 corresponding to the detected maximum rotating speed ω1max of the rotating body 2. Thus, the moving speed of the moving body 8 can be detected using the detected electric current flowing through the motor 3.

From Figs. 5 to 7, the estimated value v2,est of the moving or rotating speed of the moving body 8 can be expressed by Formula (3) below.

$$v2,est = T1^{-1}(\omega 1, T1, g) = v2(\omega 1, T1, g) \tag{3}$$

As seen from Formula (3), the estimated value v2,est of the moving or rotating speed of the moving body 8 is a function of the rotating speed ω1 of the rotating body 2, the torque T1, and the gap g.

As seen from the graph of Fig. 6, when the gap between the moving body 8 and the rotating body 2 changes, the correlation between the rotating speed of the rotating body 2 and the torque also changes. Therefore, it is necessary to previously grasp the gap between the moving body 8 and the rotating body 2. If the gap does not change in accordance with movement or rotation of the moving body 8, the correlation between the rotating speed of the rotating body 2 and the torque can be obtained from Fig. 6 based on the gap detected previously.

On the other hand, if the gap may change in accordance with movement or rotation of the moving body 8, it is necessary to detect the current gap. The gap can be detected by detecting the torque T1 for each of at least two different rotating speeds of the rotating body 2 controlled to occur successively in a very short period of time during which it is presumed that the moving or rotating speed of the moving body 8 remains unchanged and the gap remains unchanged. As described above, the rotating speed of the rotating body 2 can be controlled by the rotation control unit 4, and the torque T1 can be obtained from the graph of Fig. 7 using the electric current flowing through the motor 3 that is detected by the current detecting unit 5. Therefore, detection of the gap includes, in a very short period of time, controlling the rotating speed of the rotating body 2 for a plurality of times, detecting the electric current flowing through the motor 3, detecting from the graphs of Figs. 6 and 7 the rate of change of the torque relative to the change of the rotating speed of the rotating body 2, and estimating the gap from this rate. As seen from Fig. 6, the rate of change of the torque relative to the change of the rotating speed of the rotating body 2 varies for different gaps, and therefore, the gap can be estimated accurately by detecting the above rate from the actual measured value of the electric current flowing through the motor 3. The gap can also be calculated from Formula (3). The torque T1 is detected for each of at least two different rotating speeds of the rotating body 2 controlled to occur successively in a very short period of time during which it is presumed that the moving or rotating speed of the moving body 8 remains unchanged and the gap remains unchanged. The detected values are substituted in Formula (3) to obtain simultaneous equations with two variables (v2, g). The simultaneous equations are solved to obtain the speed v2 and the gap g simultaneously. This calculation requires that the function of Formula (3) be made clear.

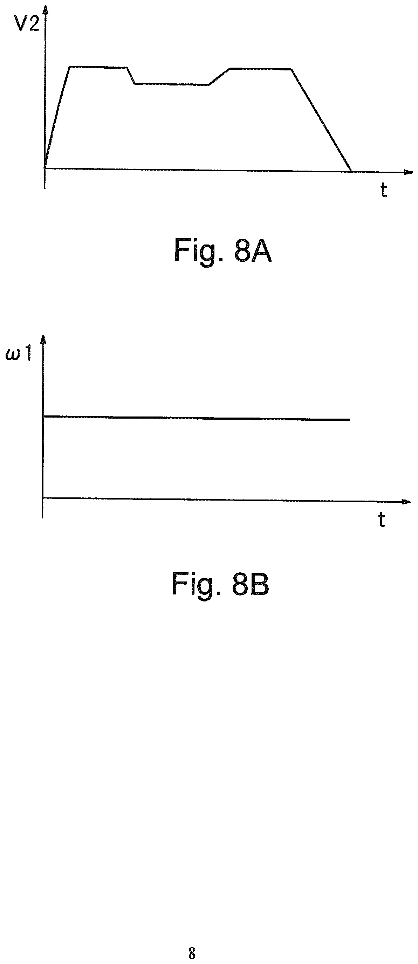

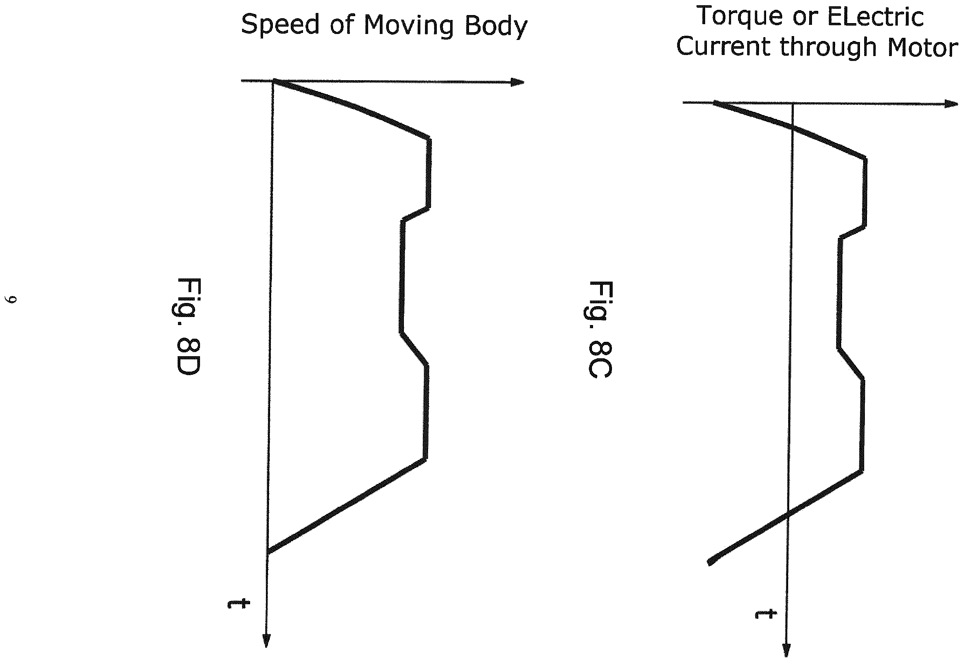

Fig. 8A shows a waveform indicating the time variation of the moving or rotating speed of the moving body 8, Fig. 8B shows a waveform indicating the time variation of the rotating speed of the rotating body 2, Fig. 8C shows a waveform indicating the time variation of the torque applied to the rotary shaft of the motor 3 or the electric current flowing through the motor 3, and Fig. 8D shows an estimation waveform indicating an estimated moving or rotating speed of the moving body 8.

As seen from the waveforms of Figs. 8A, 8B, 8C, and 8D, when the moving or rotating speed of the moving body 8 changes while the rotating speed of the rotating body 2 is controlled to be constant by the rotation control unit 4, the electric current and the torque of the motor 3 change accordingly, and thus the moving or rotating speed of the moving body 8 can be estimated accurately from the graphs of Figs. 5 to 7 by detecting the change of the electric current of the motor 3 by the current detecting unit 5.

The respective opposed surfaces of the rotating body 2 and the moving body 8 partially overlap each other, and when there occurs a change in degree of overlapping, the degree of magnetic coupling between the moving body 8 and the rotating body 2 changes to change inclinations of the graphs in Fig. 5 and Fig. 6. Accordingly, in obtaining a graph showing a correlation between the moving speed of the moving body 8 and the maximum rotating speed of the rotating body 2 as shown in Fig. 5, it is required that the degree of magnetic coupling between the moving body 8 and the rotating body 2 including the gap therebetween be set beforehand to a predetermined value. The degree of magnetic coupling between the moving body 8 and the rotating body 2 changes depending on the gap between the moving body 8 and the rotating body 2 or the degree of overlapping between the respective opposed surfaces of the moving body 8 and the rotating body 2. Furthermore, the degree of magnetic coupling changes also in a case where foreign matter has adhered to the opposed surfaces of the moving body 8 and the rotating body 2 or in a case where some type of magnetism blocking member is disposed between the moving body 8 and the rotating body 2. Also for the graphs in Fig. 6, fundamentally, it is preferable that a correlation between the rotating speed of the rotating body 2 and the torque be obtained for each of the cases where the degree of magnetic coupling between the moving body 8 and the rotating body 2 is varied in a plurality of manners by various factors including the gap.

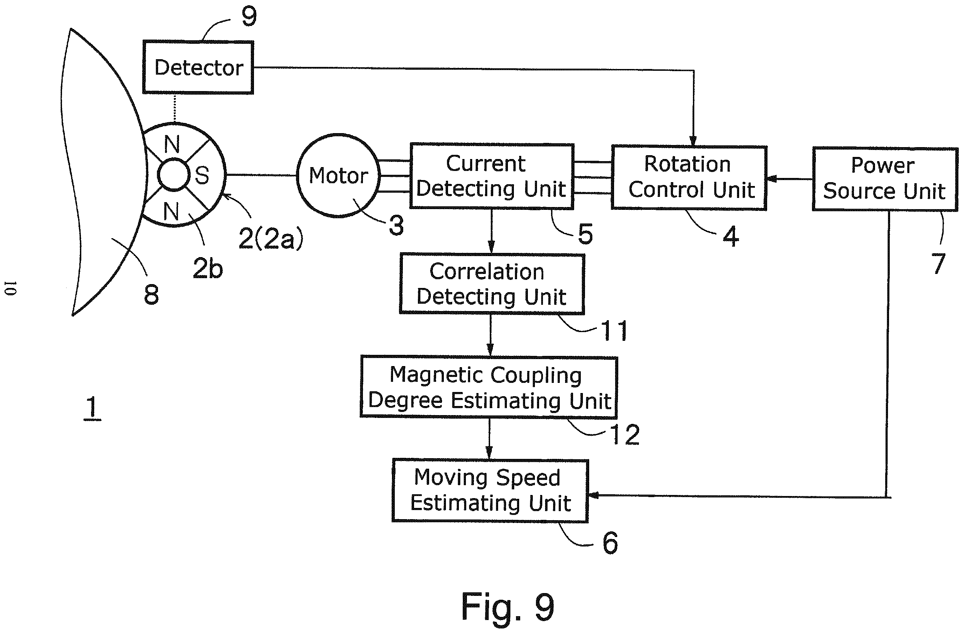

Fig. 9 is a block diagram showing the speed detecting device 1 of Fig. 1 additionally including a correlation detecting unit 11 and a magnetic coupling degree estimating unit 12. The correlation detecting unit 11 detects the correlation between the electric current flowing through the motor 3 and the moving or rotating speed of the moving body 8. More specifically, the correlation detecting unit 11 detects the correlation between the torque and the rotating speed of the rotating body 2 and the correlation between the rotating speed of the rotating body 2 and the moving or rotating speed of the moving body 8, for each of the plurality of degrees of magnetic coupling between the rotating body 2 and the moving body 8.

The magnetic coupling degree estimating unit 12 estimates the degree of magnetic coupling based on the value of the electric current flowing through the motor 3 detected successively for a plurality of times for different numbers of rotations of the rotating body and the correlations detected by the correlation detecting unit 11 for each of the plurality of times.

The moving speed estimating unit 6 in Fig. 9 estimates the moving or rotating speed of the moving body 8 based on the electric current detected by the current detecting unit 5, the degree of magnetic coupling estimated by the magnetic coupling degree estimating unit 12, and the correlations detected by the correlation detecting unit 11.

Upon the moving or rotating speed of the moving body 8 being estimated, acceleration information can be detected by differentiating the speed, and positional information on the moving body 8 can be detected by integrating the moving or rotating speed of the moving body 8.

As described above, in the first embodiment, the rotating body 2 receives the rotational drive force in accordance with the moving or rotating direction of the moving body 8, the electric current flowing through the motor 3 is detected while the motor 3 applies the rotational drive force to the rotating body 2 to control the number of rotations to be a desired number, the torque of the motor 3 is detected from the value of the electric current, the maximum rotation speed of the rotating body 2 is detected from the detected torque, and the moving or rotating speed of the moving body 8 is detected from the detected maximum rotating speed. Therefore, the moving or rotating speed of the moving body 8 can be detected from the value of the electric current flowing through the motor 3 and the rotating speed of the rotating body 2.

In order to detect the moving or rotating speed of the moving body 8, the moving body 8 typically has mounted thereto a permanent magnet for detecting a speed, an optical slit ring for an encoder, a detection gear for a proximity sensor, or the like. When it is not permitted to additionally machine the moving body 8, it is possible according to this embodiment that the rotating body 2 is opposed to the moving body 8 in a vicinity of the moving body 8, and the electric current of the motor 3 is detected, so that the moving or rotating speed of the moving body 8 can be accurately estimated.

< Second Embodiment >

In a second embodiment, rotational energy of a rotating body 2 is converted into electric energy, which then is stored beforehand in a capacitor, and the electric energy thus stored is used to estimate a moving or rotating speed of a moving body 8.

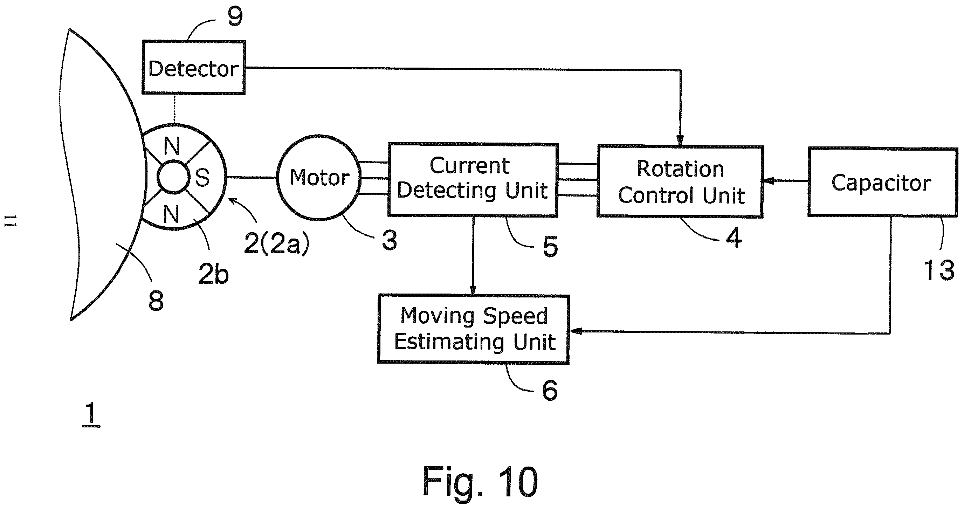

Fig. 10 is a block diagram showing a schematic configuration of a speed detecting device 1 according to the second embodiment. In addition to the configuration shown in Fig. 1, the speed detecting device 1 in Fig. 10 is provided further with a capacitor 13. As with the motor 3 of Fig. 1, the motor 3 of Fig. 10 also operates as a power generator and as a so-called motor.

The motor 3 converts kinetic energy produced by rotation of the rotating body 2 into electric energy. The capacitor 13 stores the electric energy obtained through conversion by the motor 3. The electric energy stored in the capacitor 13 is used as a power source for at least one of a detector 9 and a moving speed estimating unit 6. The capacitor 13 may be added to the speed detecting device 1 shown in Fig. 9.

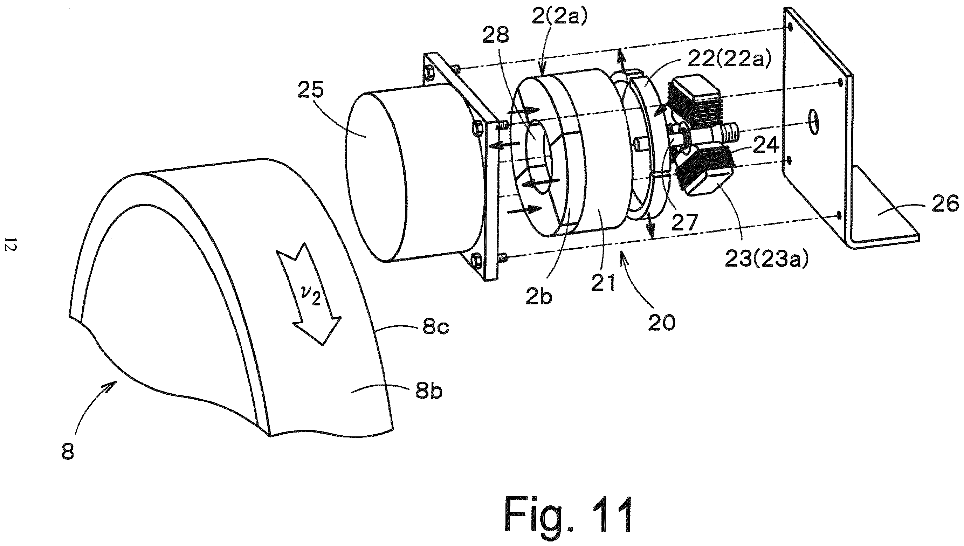

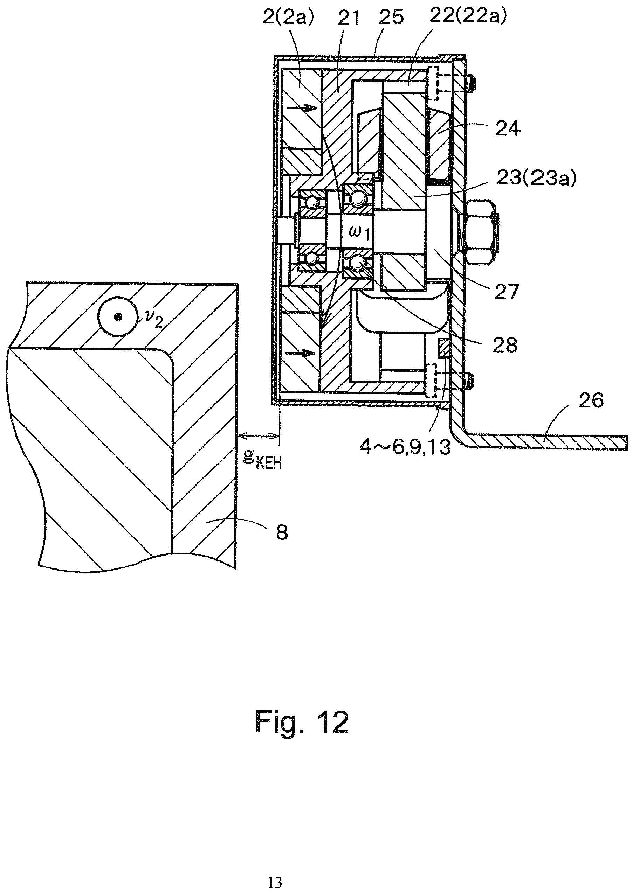

Fig. 11 is an exploded perspective view of a non-contact power generator 20 including the speed detecting device 1 shown in Fig. 10, and Fig. 12 is a sectional view of the non-contact power generator 20 shown in Fig. 11. The non-contact power generator 20 in Fig. 11 includes a rotor 21, a second rotating body 22 including a second permanent magnet 22a, a stator 23, and a coil 24 that constitute part of the power generator and also constitute part of the speed detecting device 1. In the following description, the rotating body 2 and a permanent magnet 2a included in the speed detecting device 1 are referred to as a first rotating body 2 and a first permanent magnet 2a, respectively, so as to be distinguished from the second rotating body 22 and the second permanent magnet 22a included in the non-contact power generator 20, respectively.

The speed detecting device 1 is covered with a case (protective member) 25. The stator 23 is fixed on a mounting plate 26. The case 25 and the mounting plate 26 are not essential constituent components and may have any desired shapes and sizes.

All of the first rotating body 2, the rotor 21, and the second rotating body 22 are rotatable about a common rotary shaft 27. The first rotating body 2, the rotor 21, and the second rotating body 22 rotate integrally about the rotary shaft 27. More specifically, the rotor 21 is rotatably supported to the rotary shaft 27 via a bearing 28. The first rotating body 2, the rotor 21, and the second rotating body 22 may have the same or different diameters. In a typical example, the rotor 21 and the second rotating body 22 are connected to each other. Alternatively, the first rotating body 2, the rotor 21, and the second rotating body 22 may be physically connected to each other. A bearing 28 is disposed around the rotary shaft 27, such that the rotary shaft 27 rotates clockwise or counterclockwise in accordance with the direction of the rotation of the moving body 8. In the example shown in Fig. 11 and Fig. 12, the first rotating body 2 and the rotor 21 have substantially the same diameter, and the second rotating body 22 has a smaller diameter than the rotor 21. Thus, the second rotating body 22 can be housed inside an inner peripheral surface of the rotor 21.

As shown in Fig. 11, the second rotating body 22 includes the second permanent magnet 22a having an annular shape, the second permanent magnet 22a having a plurality of magnetic poles 2b arranged circumferentially. The number of magnetic poles of the second permanent magnet 22a is not particularly limited.

The stator 23 is disposed inside an inner peripheral surface of the second permanent magnet 22a having the annular shape. The stator 23 is stationary and has a plurality of teeth 23a radiating from a center of the second permanent magnet 22a. The stator 23 is made of a magnetic material, and each of the teeth 23a has a coil 24 wound thereon. These coils 24 are arranged at such positions as to be linked with magnetic fluxes from the second permanent magnet 22a, and configured to produce an induced electromotive force according to an amount of change in the magnetic fluxes linked with the coils 24. A gap is provided between a distal end position of each of the radiating teeth 23a and the inner peripheral surface of the second permanent magnet 22a.

The motor 3 includes the second rotating body 22, the stator 23, and the coils 24. When the first rotating body 2 is rotated by movement or rotation of the moving body 8, the rotor 21 and the second rotating body 22 also rotate integrally with the first rotating body 2. Thus, an alternating magnetic flux that periodically changes in direction is linked with the coils 24 wound on the teeth 23a of the stator 23, and an induced electromotive force is produced in the coils 24. As described above, the motor 3 converts, via the second rotating body 22, rotational energy of the first rotating body 2 into an induced electromotive force that flows through the coils 24. The rotor 21 is made of a magnetic material and functions also as a yoke between the first rotating body 2 and the second rotating body 22. This can prevent leakage of magnetic fluxes produced in the first permanent magnet 2a and the second permanent magnet 22a and thus can improve power generation efficiency.

As shown in Fig. 12, the rotation control unit 4, the current detecting unit 5, the moving speed estimating unit 6, the detector 9, and the capacitor 13 included in the speed detecting device 1 are arranged in a vicinity of the first rotating body 2 and on a stationary body, such as, for example, on the mounting plate 26. These components, required to be disposed on a stationary body, may be disposed, for example, on the case 25 or may be connected as separate bodies via cables, not limited to being disposed on the mounting plate 26.

The second permanent magnet 22a and the stator 23 may function also to cancel out at least part of a cogging torque produced in the first permanent magnet 2a depending on a relative relationship in shape and position between the moving body 8 and the first permanent magnet 2a.

In a case where the first rotating body 2 in the speed detecting device 1 is covered with the case 25 as shown in Fig. 11 and Fig. 12, it is likely that a magnetic material is attracted by a magnetic force of the first permanent magnet 2a in the case 25 and thus adheres to an outer surface of the case 25. Particularly in a case where the moving body 8 is a wheel of a train, it is likely that the wheel is scraped due to contact with a rail, and shavings thereof adhere to the outer surface of the case 25. A magnetic material such as shavings adhering to the outer surface of the case 25 might cause a variation in degree of magnetic coupling between the moving body 8 and the rotating body 2. Since the rotating body 2 in the case 25 rotates in accordance with movement or rotation of the moving body 8, the magnetic material adhering to the outer surface of the case 25 also rotates in accordance with rotation of the rotating body 2 and thus can be expected to be scattered from the outer surface of the case 25 to the outside by the centrifugal force. However, as for a highly adhesive magnetic material containing oil or water or a magnetic material adhering to a portion of the rotating body in a neighborhood of a rotation center thereof, which hardly receives the centrifugal force, such a magnetic material may remain on the outer surface of the case 25 without being scattered. Therefore, there may be provided a magnetic material removing unit for removing a magnetic material adhering to the outer surface of the case 25. A specific mechanism of the magnetic material removing unit is not limited, and the magnetic material removing unit may have a mechanism similar to, for example, a wiper of a vehicle. Furthermore, the magnetic material removing unit may be driven utilizing electric energy stored in the capacitor 13. Furthermore, the case 25 may include a guide, such as a groove or a projection, provided on the outer surface thereof so as to have such a case shape that a rotating magnetic material moves along the guide and is scattered toward an outer periphery of the case 25.

As described above, in the second embodiment, kinetic energy produced by movement or rotation of the moving body 8 is converted into rotational energy of the rotating body 2, and the rotational energy of the rotating body 2 is converted into electric energy by the motor 3 and stored in the capacitor 13. Then, utilizing the electric energy stored in the capacitor 13, the speed detecting device 1 is driven to measure the moving or rotating speed of the moving body 8. Thus, even in an environment in which no external power source is available, the moving or rotating speed of the moving body 8 can be estimated, so that a wider range of applications of the speed detecting device 1 can be obtained. Also, there is no need for a cable for connecting an external power source to the speed detecting device 1, and thus restrictions on an installation location of the speed detecting device 1 are reduced.

While the first and second embodiments described above show an example in which the side surface 8a of the moving body 8 is opposed to the principal surface 2d of the rotating body 2, the arrangement between the moving body 8 and the rotating body 2 is not limited thereto. Any other structure than the above-described structure is applicable to the speed detecting device 1 according to the present disclosure, as long as the structure includes the rotating body 2 including the permanent magnet 2a that rotates by a Lorentz force produced in accordance with a moving or rotating direction of the moving body 8.

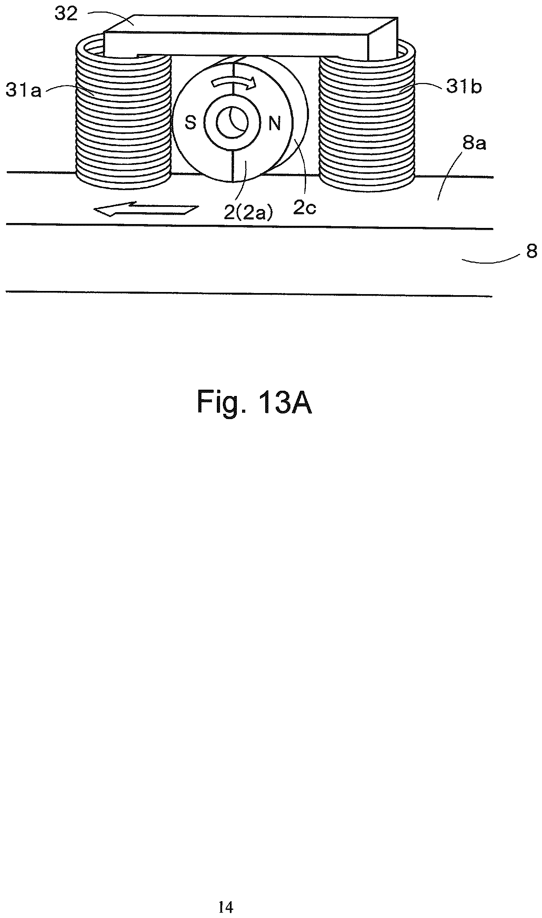

Fig. 13A is a view showing a first modification example of the speed detecting device 1. A speed detecting device 1 in Fig. 13A includes a rotating body 2 including a permanent magnet 2 that rotates about a rotation axis, two coils (a first coil 31a and a second coil 31b), and a yoke 32.

The permanent magnet 2a is spaced above and opposed to a principal surface 8a of a moving body 8 that rotates or moves, and rotates in accordance with a rotating or moving direction of the moving body 8. The permanent magnet 2a has at least two magnetic poles 2b, and magnetization directions of the magnetic poles 2b are normal to an outer peripheral surface of the permanent magnet 2a.

An outer peripheral surface 2c of the permanent magnet 2a is spaced from the principal surface 8a of the moving body 8, and the permanent magnet 2a is rotatable without contacting the principal surface 8a of the moving body 8. In the example shown in Fig. 13A, the first coil 31a, which is one of the two coils, is disposed on a rear side of the permanent magnet 2a with respect to the rotating or moving direction of the moving body 8. The second coil 31b, which is the other of the two coils, is disposed on a front side of the permanent magnet 2a with respect to the rotating or moving direction of the moving body 8. The first and second coils 31a, 31b are spaced above the principal surface 8a of the moving body 8.

Furthermore, in the example shown in Fig. 13A, the yoke 32 having a U-shape extends in and above the first and second coils 31a, 31b. A gap is provided between the yoke 32 and the permanent magnet 2a, as well as between the permanent magnet 2a and each of the first and second coils 31a, 31b. These gaps are air gaps. Therefore, the permanent magnet 2a rotates in a region surrounded by the principal surface of the moving body 8, the first and second coils 31a, 31b, and the yoke 32.

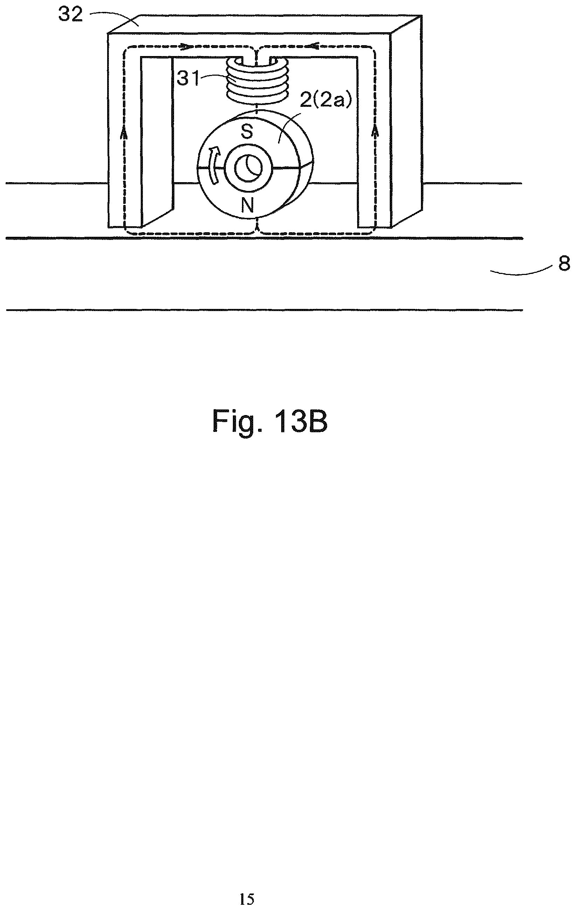

Fig. 13B is a view showing a second modification example of the speed detecting device 1, in which power generation is performed using a single coil 31. The coil 31 is wound on a yoke 32 above a permanent magnet 2a. The yoke 32 extends from above the permanent magnet 2a toward both sides of a moving body 8 in a moving direction thereof, so as to surround the permanent magnet 2. Since the coil 31 is linked with almost all magnetic fluxes from the permanent magnet 2a, it is not necessarily required to provide a plurality of coils 31. The coil 31 may be disposed at any location where all the magnetic fluxes from the permanent magnet 2a concentrate (for example, a vicinity of at least one of an N-pole and an S-pole of the permanent magnet 2a).

In either of Fig. 13A and Fig. 13B, a motor 3 configured similarly to the one in Fig. 1 is connected to the rotary shaft of the rotating body 2 including the permanent magnet 2a, and the speed detecting device 1 further includes a rotation control unit 4, a current detecting unit 5, and a moving speed estimating unit 6, so that the moving speed of the moving body 8 can be estimated.

Aspects of the invention are not limited to the foregoing embodiments and embrace various modifications conceivable by those skilled in the art, as long as these modifications fall within the scope of the appended claims.

**LIST OF REFERENCE NUMBERS**

| | |
|---|---|
| 1 | speed detecting device |
| 2 | rotating body |
| 2b | magnetic poles |
| 3 | motor |
| 4 | rotation control unit |
| 5 | current detecting unit |
| 6 | moving speed estimating unit |
| 7 | power source unit |
| 8 | moving body |
| 9 | detector |
| 11 | correlation detecting unit |
| 12 | magnetic coupling degree estimating unit |

13    capacitor
20    non-contact power generator
21    rotor
22    second rotating body
22a   second permanent magnet
23    stator
24    coil
25    case
26    mounting plate
27    rotary shaft
28    bearing
31a   first coil
31b   second coil
32    yoke

**Claims**

1. A speed detecting device (1) comprising:

   a rotating body (2) including a permanent magnet, the rotating body being (2) spaced above a principal surface of a moving body (8), the moving body (8) being a conductor configured to rotate or move, the permanent magnet being configured to be driven to rotate about a predetermined rotation axis by a Lorentz force produced in accordance with a rotating or moving direction of the moving body;
   a rotational speed $\omega 1max$ caused by said Lorentz force depending on the moving or rotating speed of the moving body (8);
   a motor (3) configured to apply a further rotational drive force to the rotating body (2);
   a rotation control unit (4) configured to control the rotational drive force applied by the motor (3) to the rotating body (2) to vary a rotating speed of the rotating body (2) caused by the rotational drive force of the Lorentz force such that the rotating body (2) rotates at a desired rotating speed $\omega 1$;
   a current detecting unit (5) configured to detect a value of electric current flowing through the motor (3) during the operation to rotate the rotating body (2) at the desired rotating speed $\omega 1$; and
   a moving speed estimating unit (6) configured to estimate a moving or rotating speed of the moving body (8) based on the value of the electric current detected by the current detecting unit (5), said current being correlated with said further rotational drive force.

2. The speed detecting device (1) according to claim 1, further comprising:

   a correlation detecting unit (11) configured to detect a correlation between the value of the electric current detected by the current detecting unit (5) and the moving or rotating speed of the moving body (8),
   wherein the moving speed estimating unit (6) is configured to estimate the moving or rotating speed of the moving body (8) based on the value of the electric current detected by the current detecting unit (5) and the correlation.

3. The speed detecting device (1) according to claim 1 or 2, wherein the moving speed estimating unit (6) is configured to estimate the moving or rotating speed of the moving body (8) based on a correlation between the value of the electric current detected by the current detecting unit (5) and a torque applied to a rotary shaft (27) of the motor (3), a correlation between the torque, which depends on a degree of magnetic coupling between the rotating body (2) and the moving body (8), and the rotating speed of the rotating body (2), and a correlation between the rotating speed of the rotating body (2), which depends on the degree of magnetic coupling, and the moving or rotating speed of the moving body (8).

4. The speed detecting device (1) according to claim 3, further comprising:

   a correlation detecting unit (11) configured to detect the correlation between the torque and the rotating speed of the rotating body (2) and the correlation between the rotating speed of the rotating body (2) and the moving or rotating speed of the moving body (8), for each of a plurality of degrees of magnetic coupling between the rotating body (2) and the moving body (8); and

a magnetic coupling degree estimating unit (12) configured to estimate the degree of magnetic coupling based on the value of the electric current detected by the current detecting unit (5) successively for a plurality of times for varying rotating speed of the rotating body (2) and the correlations detected by the correlation detecting unit (11) for each of the plurality of times,

wherein the moving speed estimating unit (6) is configured to estimate the moving or rotating speed of the moving body (8) based on the value of the electric current detected by the current detecting unit (5), the degree of magnetic coupling estimated by the magnetic coupling degree estimating unit (12), and the correlations detected by the correlation detecting unit (11).

5. The speed detecting device (1) according to claim 3 or 4, wherein the degree of magnetic coupling depends on a gap between the rotating body (2) and the moving body (8).

6. The speed detecting device (1) according to claim 3 or 4, wherein the degree of magnetic coupling depends on a degree of overlapping between respective opposed surfaces of the rotating body (2) and the moving body (8).

7. The speed detecting device according to any one of claims 1 to 6, wherein the rotating body (2) is spaced from and opposed to the principal surface of the moving body (8), the principal surface being a side surface of the moving body (8) continuous with an outer peripheral surface of the moving body (8).

8. The speed detecting device (1) according to any one of claims 1 to 7, further comprising:

a protective member (25) covering at least part of an outer surface of the rotating body (2) including a surface thereof opposed to the principal surface of the moving body (8); and
a magnetic material removing unit in the form of a wiper configured to remove a magnetic material adhering to a surface of the protective member (25) opposed to the principal surface of the moving body (8).

9. The speed detecting device (1) according to any one of claims 1 to 8, wherein the permanent magnet has two or more magnetic poles opposed to the moving body.

10. The speed detecting device (1) according to any one of claims 1 to 9,

wherein the motor (3) is configured to operate in a power generator mode in which kinetic energy produced by rotation of the rotating body is converted into electric energy,
wherein the speed detecting device (1) further comprises a capacitor (13) configured to store the electric energy obtained through conversion by the power generator, and
wherein the electric energy stored by the capacitor (13) is used as a power source for at least one of the motor (3), the rotation control unit (4), the current detecting unit (5), and the moving speed estimating unit (6).


**Patentansprüche**

1. Geschwindigkeitserfassungsvorrichtung (1), umfassend:

einen rotierenden Körper (2), der einen Permanentmagneten enthält, wobei der rotierende Körper (2) über einer Hauptfläche eines sich bewegenden Körpers (8) beabstandet ist, wobei der sich bewegende Körper (8) ein Leiter ist, der so konfiguriert ist, dass er sich dreht oder bewegt, wobei der Permanentmagnet so konfiguriert ist, dass er durch eine Lorentzkraft, die gemäß einer Dreh- oder Bewegungsrichtung des sich bewegenden Körpers erzeugt wird, zur Drehung um eine vorbestimmte Drehachse angetrieben wird;
eine Drehgeschwindigkeit $\omega 1max$, die durch die Lorentzkraft in Abhängigkeit von der Bewegungs- oder Drehgeschwindigkeit des beweglichen Körpers (8) verursacht wird;
einen Motor (3), der so konfiguriert ist, dass er eine weitere Drehantriebskraft auf den rotierenden Körper (2) ausübt;
eine Rotationssteuereinheit (4), die so konfiguriert ist, dass sie die von dem Motor (3) auf den rotierenden Körper (2) ausgeübte Rotationsantriebskraft steuert, um eine Rotationsgeschwindigkeit des rotierenden Körpers (2), die durch die Rotationsantriebskraft der Lorentzkraft verursacht wird, so zu verändern, dass sich der rotierende Körper (2) mit einer gewünschten Rotationsgeschwindigkeit $\omega 1$ dreht;
eine Stromerfassungseinheit (5), die so konfiguriert ist, dass sie einen Wert des durch den Motor (3) fließenden elektrischen Stroms während des Betriebs zum Drehen des rotierenden Körpers (2) mit der gewünschten Drehgeschwindigkeit ω1 erfasst; und

eine Bewegungsgeschwindigkeits-Schätzeinheit (6), die so konfiguriert ist, dass sie eine Bewegungs- oder Drehgeschwindigkeit des beweglichen Körpers (8) auf der Grundlage des Wertes des von der Stromerfassungseinheit (5) erfassten elektrischen Stroms schätzt, wobei der Strom mit der weiteren Drehantriebskraft korreliert ist.

2. Geschwindigkeitserfassungsvorrichtung (1) gemäß Anspruch 1, die ferner umfasst:

eine Korrelationserfassungseinheit (11), die so konfiguriert ist, dass sie eine Korrelation zwischen dem Wert des von der Stromerfassungseinheit (5) erfassten elektrischen Stroms und der Bewegungs- oder Drehgeschwindigkeit des beweglichen Körpers (8) erfasst,

wobei die Bewegungsgeschwindigkeits-Schätzeinheit (6) so konfiguriert ist, dass sie die Bewegungs- oder Drehgeschwindigkeit des sich bewegenden Körpers (8) auf der Grundlage des Wertes des von der Stromerfassungseinheit (5) erfassten elektrischen Stroms und der Korrelation schätzt.

3. Geschwindigkeitserfassungsvorrichtung (1) gemäß Anspruch 1 oder 2, wobei die Bewegungsgeschwindigkeits-Schätzeinheit (6) so konfiguriert ist, dass sie die Bewegungs- oder Drehgeschwindigkeit des beweglichen Körpers (8) auf der Grundlage einer Korrelation zwischen dem Wert des von der Stromerfassungseinheit (5) erfassten elektrischen Stroms und einem auf eine Drehwelle (27) des Motors (3) aufgebrachten Drehmoment schätzt, einer Korrelation zwischen dem Drehmoment, das von einem Grad der magnetischen Kopplung zwischen dem rotierenden Körper (2) und dem sich bewegenden Körper (8) abhängt, und der Drehgeschwindigkeit des rotierenden Körpers (2), und einer Korrelation zwischen der Drehgeschwindigkeit des rotierenden Körpers (2), die von dem Grad der magnetischen Kopplung abhängt, und der Bewegungs- oder Drehgeschwindigkeit des sich bewegenden Körpers (8).

4. Geschwindigkeitserfassungsvorrichtung (1) gemäß Anspruch 3, ferner umfassend

eine Korrelationserfassungseinheit (11), die so konfiguriert ist, dass sie die Korrelation zwischen dem Drehmoment und der Drehgeschwindigkeit des rotierenden Körpers (2) und die Korrelation zwischen der Drehgeschwindigkeit des rotierenden Körpers (2) und der Bewegungs- oder Drehgeschwindigkeit des sich bewegenden Körpers (8) für jeden einer Vielzahl von Graden der magnetischen Kopplung zwischen dem rotierenden Körper (2) und dem sich bewegenden Körper (8) erfasst; und

eine Magnetkopplungsgrad-Schätzeinheit (12), die so konfiguriert ist, dass sie den Grad der magnetischen Kopplung auf der Basis des Wertes des elektrischen Stroms, der von der Stromerfassungseinheit (5) sukzessive für eine Vielzahl von Zeitpunkten bei variierender Drehgeschwindigkeit des rotierenden Körpers (2) erfasst wird, und der Korrelationen, die von der Korrelationserfassungseinheit (11) für jeden der Vielzahl von Zeitpunkten erfasst werden, schätzt,

wobei die Bewegungsgeschwindigkeits-Schätzeinheit (6) so konfiguriert ist, dass sie die Bewegungs- oder Drehgeschwindigkeit des sich bewegenden Körpers (8) auf der Basis des Wertes des elektrischen Stroms, der von der Stromerfassungseinheit (5) erfasst wird, des Grades der magnetischen Kopplung, der von der Magnetkopplungsgrad-Schätzeinheit (12) geschätzt wird, und der Korrelationen, die von der Korrelationserfassungseinheit (11) erfasst werden, schätzt.

5. Geschwindigkeitserfassungsvorrichtung (1) gemäß Anspruch 3 oder 4, wobei der Grad der magnetischen Kopplung von einem Spalt zwischen dem rotierenden Körper (2) und dem beweglichen Körper (8) abhängt.

6. Geschwindigkeitserfassungsvorrichtung (1) gemäß Anspruch 3 oder 4, wobei der Grad der magnetischen Kopplung von einem Grad der Überlappung zwischen den jeweiligen gegenüberliegenden Oberflächen des rotierenden Körpers (2) und des beweglichen Körpers (8) abhängt.

7. Geschwindigkeitserfassungsvorrichtung gemäß einem der Ansprüche 1 bis 6, wobei der rotierende Körper (2) von der Hauptfläche des beweglichen Körpers (8) beabstandet ist und dieser gegenüberliegt, wobei die Hauptfläche eine Seitenfläche des beweglichen Körpers (8) ist, die mit einer Außenumfangsfläche des beweglichen Körpers (8) zusammenhängt.

8. Geschwindigkeitserfassungsvorrichtung (1) gemäß einem der Ansprüche 1 bis 7, ferner umfassend:

ein Schutzelement (25), das mindestens einen Teil einer Außenfläche des rotierenden Körpers (2) abdeckt, einschließlich einer Fläche davon, die der Hauptfläche des beweglichen Körpers (8) gegenüberliegt; und

eine Magnetmaterialentfernungseinheit in Form eines Abstreifers, der so konfiguriert ist, dass er ein magnetisches Material entfernt, das an einer Oberfläche des Schutzelements (25) haftet, die der Hauptfläche des beweglichen Körpers (8) gegenüberliegt.

**9.** Geschwindigkeitserfassungsvorrichtung (1) gemäß einem der Ansprüche 1 bis 8, wobei der Permanentmagnet zwei oder mehr Magnetpole aufweist, die dem beweglichen Körper gegenüberliegen.

**10.** Geschwindigkeitserfassungsvorrichtung (1) gemäß einem der Ansprüche 1 bis 9,

wobei der Motor (3) so konfiguriert ist, dass er in einem Stromerzeugungsmodus arbeitet, in dem die durch die Drehung des rotierenden Körpers erzeugte kinetische Energie in elektrische Energie umgewandelt wird,
wobei die Geschwindigkeitserfassungsvorrichtung (1) ferner einen Kondensator (13) umfasst, der so konfiguriert ist, dass er die durch Umwandlung durch den Leistungsgenerator erhaltene elektrische Energie speichert, und
wobei die von dem Kondensator (13) gespeicherte elektrische Energie als Energiequelle für mindestens ein Element, umfassend den Motor (3), die Rotationssteuereinheit (4), die Stromerfassungseinheit (5) und die Bewegungsgeschwindigkeits-Schätzeinheit (6), verwendet wird.

**Revendications**

**1.** Dispositif de détection de vitesse (1) comprenant :

un corps rotatif (2) comprenant un aimant permanent, le corps rotatif (2) étant espacé au-dessus d'une surface principale d'un corps mobile (8), le corps mobile (8) étant un conducteur configuré pour tourner ou se déplacer, l'aimant permanent étant configuré pour être entraîné en rotation autour d'un axe de rotation prédéterminé par une force de Lorentz produite conformément à une direction de rotation ou de déplacement du corps mobile ;
une vitesse de rotation $\omega 1max$ causée par ladite force de Lorentz en fonction de la vitesse de déplacement ou de rotation du corps mobile (8) ;
un moteur (3) configuré pour appliquer une force d'entraînement en rotation supplémentaire au corps rotatif (2) ;
une unité de commande de rotation (4) configurée pour commander la force d'entraînement en rotation appliquée par le moteur (3) au corps rotatif (2) pour faire varier une vitesse de rotation du corps rotatif (2) causée par la force d'entraînement en rotation de la force de Lorentz, de sorte que le corps rotatif (2) tourne à une vitesse de rotation $\omega 1$ souhaitée ;
une unité de détection de courant (5) configurée pour détecter une valeur de courant électrique circulant dans le moteur (3) pendant l'opération de rotation du corps rotatif (2) à la vitesse de rotation $\omega 1$ souhaitée ; et
une unité d'estimation de vitesse de déplacement (6) configurée pour estimer une vitesse de déplacement ou de rotation du corps mobile (8) sur la base de la valeur du courant électrique détecté par l'unité de détection de courant (5), ledit courant étant corrélé avec ladite force d'entraînement en rotation supplémentaire.

**2.** Dispositif de détection de vitesse (1) selon la revendication 1, comprenant en outre :

une unité de détection de corrélation (11) configurée pour détecter une corrélation entre la valeur du courant électrique détecté par l'unité de détection de courant (5) et la vitesse de déplacement ou de rotation du corps mobile (8),
dans lequel l'unité d'estimation de vitesse de déplacement (6) est configurée pour estimer la vitesse de déplacement ou de rotation du corps mobile (8) sur la base de la valeur du courant électrique détecté par l'unité de détection de courant (5) et de la corrélation.

**3.** Dispositif de détection de vitesse (1) selon la revendication 1 ou 2, dans lequel l'unité d'estimation de vitesse de déplacement (6) est configurée pour estimer la vitesse de déplacement ou de rotation du corps mobile (8) sur la base d'une corrélation entre la valeur du courant électrique détecté par l'unité de détection de courant (5) et un couple appliqué à un arbre tournant (27) du moteur (3), d'une corrélation entre le couple qui dépend d'un degré de couplage magnétique entre le corps rotatif (2) et le corps mobile (8), et la vitesse de rotation du corps rotatif (2), et d'une corrélation entre la vitesse de rotation du corps rotatif (2) qui dépend du degré de couplage magnétique, et la vitesse de déplacement ou de rotation du corps mobile (8).

**4.** Dispositif de détection de vitesse (1) selon la revendication 3, comprenant en outre :

une unité de détection de corrélation (11) configurée pour détecter la corrélation entre le couple et la vitesse de rotation du corps rotatif (2) et la corrélation entre la vitesse de rotation du corps rotatif (2) et la vitesse de déplacement ou de rotation du corps mobile (8), pour chacun d'une pluralité de degrés de couplage magnétique entre le corps rotatif (2) et le corps mobile (8) ; et

une unité d'estimation de degré de couplage magnétique (12) configurée pour estimer le degré de couplage magnétique sur la base de la valeur du courant électrique détecté par l'unité de détection de courant (5) successivement pour une pluralité de temps pour faire varier une vitesse de rotation du corps rotatif (2), et de la corrélations détectée par l'unité de détection de corrélation (11) pour chaque temps de la pluralité de temps,

dans lequel l'unité d'estimation de vitesse de déplacement (6) est configurée pour estimer la vitesse de déplacement ou de rotation du corps mobile (8) sur la base de la valeur du courant électrique détecté par l'unité de détection de courant (5), du degré de couplage magnétique estimé par l'unité d'estimation de degré de couplage magnétique (12), et de la corrélations détectée par l'unité de détection de corrélation (11).

5. Dispositif de détection de vitesse (1) selon la revendication 3 ou 4, dans lequel le degré de couplage magnétique dépend d'un écart entre le corps rotatif (2) et le corps mobile (8).

6. Dispositif de détection de vitesse (1) selon la revendication 3 ou 4, dans lequel le degré de couplage magnétique dépend d'un degré de chevauchement entre des surfaces opposées respectives du corps rotatif (2) et du corps mobile (8).

7. Dispositif de détection de vitesse selon l'une quelconque des revendications 1 à 6, dans lequel le corps rotatif (2) est espacé de la surface principale du corps mobile (8) et opposé à celle-ci, la surface principale étant une surface latérale du corps mobile (8) en continuité avec une surface périphérique extérieure du corps mobile (8).

8. Dispositif de détection de vitesse (1) selon l'une quelconque des revendications 1 à 7, comprenant en outre :

un élément de protection (25) couvrant au moins une partie d'une surface extérieure du corps rotatif (2) comprenant une surface de celui-ci opposée à la surface principale du corps mobile (8) ; et
une unité d'élimination de matériau magnétique sous la forme d'un dispositif d'essuyage configuré pour éliminer un matériau magnétique adhérant à une surface de l'élément de protection (25) opposée à la surface principale du corps mobile (8).

9. Dispositif de détection de vitesse (1) selon l'une quelconque des revendications 1 à 8, dans lequel l'aimant permanent a deux pôles magnétiques ou plus opposés au corps mobile.

10. Dispositif de détection de vitesse (1) selon l'une quelconque des revendications 1 à 9,

dans lequel le moteur (3) est configuré pour fonctionner dans un mode générateur de puissance dans lequel l'énergie cinétique produite par la rotation du corps rotatif est convertie en énergie électrique,
dans lequel le dispositif de détection de vitesse (1) comprend en outre un condensateur (13) configuré pour stocker l'énergie électrique obtenue par conversion par le générateur de puissance, et
dans lequel l'énergie électrique stockée par le condensateur (13) est utilisée comme source de puissance pour au moins un parmi le moteur (3), l'unité de commande de rotation (4), l'unité de détection de courant (5), et l'unité d'estimation de vitesse de déplacement (6).

Fig.1

Fig. 2

Fig. 3

Fig. 4

Fig. 5

Fig. 6

Fig. 7

Fig. 8A

Fig. 8B

8

Fig. 8C

Fig. 8D

Fig. 9

EP 3 553 532 B1

Fig. 10

Fig. 11

2(2a)  21  25  22(22a)

24

23(23a)

$\omega_1$

27

28

26

$\nu_2$

$g_{KEH}$

4~6,9,13

8

Fig. 12

## Fig. 13A

## Fig. 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0325372 B
- US 2014346777 A1
- US 2016111936 A1
- US 2014070675 A1